# DEMANDE DE BREVET EUROPEEN

(11) **EP 4 830 689 A2**
(43) Date de publication de la demande: **28.10.2026**
(21) Numéro de dépôt: 26204982.8
(22) Date de dépôt: 22.12.2021
(51) Int. Cl.: A61J 1/14

(54) **RÉCIPIENT EN VERRE BOROSILICATE À RÉSISTANCE CHIMIQUE AMÉLIORÉE POUR SUBSTANCE PHARMACEUTIQUE OU DE DIAGNOSTIC**

(30) Priorité: 11.01.2021 FR 2100222
(62) Numéro(s) de document de la (des) demande(s) initiale(s) en application de l'article 76 CBE: 21848181.0 / 4 274 815
(71) Demandeur: SGD S.A., 92097 Paris la Défense Cédex (FR)
(72) Inventeur: ETCHEPARE, Pierre-Luc, 76000 ROUEN (FR); ZHANG, Jingwei, 92160 ANTONY (FR); DEPOILLY, Christophe, 80210 AIGNEVILLE (FR)
(74) Mandataire: Cabinet Didier Martin

(57) **Abrégé**

- L'invention concerne un récipient (1) contenant un produit ou sous-produit sanguin, ledit récipient comprenant une paroi (2) en verre délimitant une cavité d'accueil (3) pour ledit produit sous-produit sanguin, ladite paroi en verre étant en verre borosilicate et présentant une face interne (4) située en regard de ladite cavité d'accueil (3), ladite face interne formant une surface en verre nue destinée à venir en contact direct avec ladite substance, ladite paroi en verre présentant une fraction atomique en sodium, mesurée par spectrométrie de photoélectrons induits par rayons X, qui est inférieure ou égale à 2,0 %at jusqu'à une profondeur d'au moins 300 nm à partir de la surface de la face interne.

- Récipients en verre.

## Description

### DOMAINE TECHNIQUE

La présente invention se rapporte au domaine technique général des récipients en verre, en particulier pour le conditionnement de substances pharmaceutiques ou de diagnostic.

### TECHNIQUE ANTERIEURE

Dans le domaine des emballages primaires en verre à usage pharmaceutique, on cherche à proposer des récipients, en particulier de type flacon, qui présentent une excellente compatibilité chimique avec le produit ou préparation qu'ils sont destinés à contenir. On vise en effet à prévenir toute interaction préjudiciable entre une espèce issue du verre formant le récipient et le produit que ce dernier contient.

Dans ce contexte, les pharmacopées identifient trois principaux types de récipients en verre différents, qui peuvent être acceptables pour un usage pharmaceutique selon la nature de la préparation considérée. Ces récipients sont classés selon leur niveau de résistance chimique, et en particulier selon la résistance qu'offre le verre, dont ils sont formés, à la cession de substances inorganiques hydrosolubles dans des conditions fixées de contact entre la surface du récipient en verre considéré et l'eau. On distingue ainsi les récipients en verre borosilicate, dits de « *Type I* », qui présentent intrinsèquement une excellente résistance chimique et qui conviennent dès lors pour la plupart des substances et préparation pharmaceutiques, et les récipients en verre silicosodocalcique classiques, dits de « *Type III »*, dont la résistance chimique est bien moins avantageuse. De ce fait, ces derniers trouvent un usage limité aux préparations en véhicule non-aqueux pour usage parentéral, aux poudres pour usage parentéral (sauf préparations lyophilisées) et aux préparations pour usage non parentéral. On distingue également des récipients en verre dits de « *Type II* », qui sont quant à eux des récipients en verre silicosodocalcique classiques, comme ceux de Type III, mais dont la face interne a été soumise à un traitement de surface spécifique afin d'améliorer significativement leur résistance chimique. Les récipients en verre de Type II présentent ainsi une résistance chimique intermédiaire entre celles des récipients en verre de Type III et des récipients en verre de Type I, qui les rend aptes au conditionnement de la plupart des préparations aqueuses acides et neutres.

Compte tenu de ce qui précède, le verre de Type I est considéré, dans l'industrie pharmaceutique, comme le verre le plus résistant chimiquement. Il s'agit par conséquent du verre de choix pour le stockage de solutions les plus agressives ou les plus instables. Cependant, dans certains cas particuliers, même la formulation du verre de Type I s'avère insuffisamment résistante chimiquement pour le stockage de solutions pharmaceutiques. Il peut se faire que la surface du verre de Type I soit corrodée et attaquée, et relargue en concentrations importantes des espèces extractibles issus du verre. Il est communément admis que, par exemple, le stockage d'eau pour injection (« *Water for Injection* », WFI) est compliqué, même dans des récipients en verre de Type I. En ce qui concerne le relargage d'extractibles du verre en solution, et outre le sodium, certains éléments sous forme de traces comme le baryum, le zinc, l'aluminium, le bore, le plomb, etc. peuvent poser des problèmes sanitaires notables. Ces éléments sont indiqués dans la documentation informative ICHQ3D (« *International Conference on Harmonization* ») comme présentant potentiellement un risque pour la santé du patient si administrés par injection parentérale.

C'est pourquoi il a été envisagé de recouvrir la face interne de la paroi en verre des récipients en verre borosilicate d'un revêtement barrière, par exemple en silice SiO2 pure ou à base de silicone, afin d'en améliorer encore la résistance chimique. Néanmoins la mise en œuvre d'un tel revêtement barrière rend la fabrication des récipients plus complexe et plus coûteuse. En outre, elle ne permet pas toujours de conférer aux récipients une résistance chimique suffisante selon la nature des substances destinées à être contenues dans ces derniers.

### EXPOSE DE L'INVENTION

En conséquence de ce qui précède, les objets assignés à la présente invention visent à remédier aux insuffisances et problématiques techniques identifiées ci-dessus, et à proposer un nouveau récipient à paroi en verre qui présente une excellente résistance chimique tout en étant relativement peu onéreux à fabriquer.

Un autre objet de l'invention vise à proposer un nouveau récipient à paroi en verre qui est outre particulièrement facile à fabriquer.

Un autre objet de l'invention vise à proposer un nouveau récipient à paroi en verre qui est sûr sur le plan sanitaire.

Les objets assignés à l'invention sont atteints à l'aide d'un récipient comprenant une paroi en verre délimitant une cavité d'accueil pour une substance, en particulier pour une substance pharmaceutique ou de diagnostic, ladite paroi en verre présentant une face interne située en regard de ladite cavité d'accueil, ledit récipient étant caractérisé en ce que ladite paroi est en verre borosilicate, ladite face interne formant une surface en verre nue destinée à venir en contact direct avec ladite substance, ladite paroi en verre présentant une fraction atomique en sodium, mesurée par spectrométrie de photoélectrons induits par rayons X, qui est inférieure ou égale à 2,0 %at jusqu'à une profondeur d'au moins 300 nm à partir de la surface de la face interne.

Les objets assignés à l'invention sont également atteints à l'aide d'un récipient brut destiné à former un tel récipient conforme à l'invention, ledit récipient brut comprenant une paroi en verre délimitant une cavité d'accueil, ladite paroi en verre présentant une face interne située en regard de ladite cavité d'accueil, ladite paroi étant en verre borosilicate, ladite face interne formant une surface en verre pourvue de grains de sulfate de sodium conformés et agencés de manière sensiblement uniforme sur ladite surface, formant ainsi un voile blanc translucide sensiblement homogène, ledit récipient brut étant destiné à subir un lavage de la surface de la face interne de la paroi en verre afin d'en éliminer ledit voile.

### DESCRIPTION SOMMAIRE DES DESSINS

D'autres particularités et avantages de l'invention apparaîtront et ressortiront plus en détail à la lecture de la description faite ci-après, en référence au dessins annexé brièvement décrit ci-après, donnés uniquement à titre d'exemple illustratif et non limitatif.

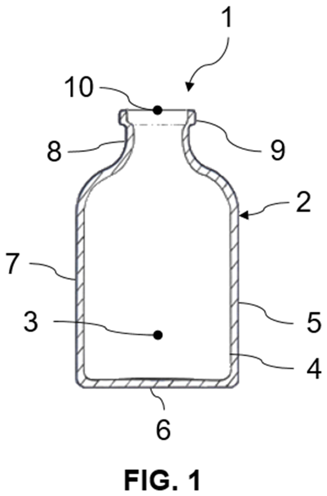

La figure 1 illustre, de manière schématique et selon une vue en coupe verticale, un mode de réalisation préférentiel d'un récipient conforme à l'invention, dans lequel le récipient constitue un flacon ou une bouteille.

### MANIERES DE REALISER L'INVENTION

L'invention concerne un récipient 1 comprenant une paroi 2 en verre délimitant une cavité d'accueil 3 pour une substance (ou produit) destinée à être conditionnée, stockée, au sein du récipient 1. Le récipient 1 selon l'invention constitue donc un emballage primaire pour ladite substance. La paroi 2 en verre du récipient 1 présente une face interne 4, située en regard de la cavité d'accueil 3, et une face externe 5 opposée. De préférence, le récipient 1 conforme à l'invention constitue un flacon ou une bouteille, comme dans le mode de réalisation préférentiel illustré en exemple à la figure 1. La paroi 2 en verre du récipient 1 est ainsi avantageusement formée par un fond 6 en verre, par l'intermédiaire duquel le récipient 1 peut reposer de manière stable sur un support plan, une paroi latérale 7 en verre qui s'élève à partir de la périphérie du fond 6, et un col 8 pourvu d'une bague 9 qui délimite une ouverture 10 donnant accès à la cavité d'accueil 3 depuis l'extérieur du récipient 1. Le récipient 1 forme alors avantageusement une pièce de verre unique, monolithique. Avantageusement, ladite ouverture 10 est prévue pour pouvoir être obturée, typiquement par un bouchon ou un opercule, amovible ou perforable (non illustré). La substance que le récipient 1 selon l'invention est destiné à contenir au sein de sa cavité d'accueil 3 est, en particulier, une substance pharmaceutique, comme par exemple un médicament, par exemple destinée à être administrée par voie parentérale (générale ou locorégionale) ou encore à être ingérée ou absorbée par un patient, ou encore une substance de diagnostic, comme par exemple un réactif chimique ou biologique. Il s'agit de préférence d'une substance liquide. Par extension, le récipient 1 peut être conçu pour contenir une substance de nature biologique (ou fluide corporel), tel que par exemple du sang, un produit ou un sous-produit sanguin, de l'urine, etc. De préférence, le récipient 1 selon l'invention présente un volume nominal compris entre 3 mL et 1 000 mL, ce qui le rend notamment particulièrement adapté au conditionnement d'une substance pharmaceutique ou de diagnostic. Même si l'application aux domaines pharmaceutiques et diagnostiques est préférée, l'invention n'est toutefois pas limitée à un récipient à usage pharmaceutique ou diagnostique et peut notamment concerner un récipient conçu pour contenir une substance liquide, pâteuse ou pulvérulente à usage industriel (stockage de produits chimiques, etc.), vétérinaire, alimentaire, ou encore cosmétique.

Au sens de l'invention, le terme « *verre* » désigne un verre minéral. Plus précisément, la paroi du récipient 1 est, de manière générale, dans sa masse, en verre borosilicate. Le verre formant la paroi 2 du récipient 1 comprend ainsi avantageusement, en moyenne dans sa masse, entre 60 % et 80 % d'oxyde de silicium SiO₂, entre 0 % et 3,5 % d'oxyde de calcium CaO, entre 4 % et 11 % d'oxyde de sodium Na₂O, entre 1 % et 8 % d'oxyde de potassium K₂O, entre 0,5% et 4 % d'oxyde de baryum BaO, entre 7 % et 14 % d'oxyde de bore B₂O₃, et 2 % et 8 % d'oxyde d'aluminium Al₂O₃. De manière plus avantageuse encore, le verre de la paroi 2 du récipient 1 comprend, en moyenne dans sa masse, entre 65 % et 69 % d'oxyde de silicium SiO₂, entre 0 % et 1,5 % d'oxyde de calcium CaO, entre 6 % et 9 % d'oxyde de sodium Na₂O, entre 1,5 % et 5 % d'oxyde de potassium K₂O, entre 1,5 % et 3 % d'oxyde de baryum BaO, entre 11 % et 13 % d'oxyde de bore B₂O₃, et 5 % et 7 % d'oxyde d'aluminium Al₂O₃. Le verre de la paroi 2 en verre peut par ailleurs contenir des éléments additionnels, tel que du zinc, du fer, etc., de préférence à l'état de traces.

Le verre de la paroi 2 du récipient 1 est de préférence transparent ou translucide, dans le domaine du visible pour l'œil humain. Il peut s'agir indifféremment d'un verre incolore ou coloré (verre « jaune » ou « ambré », par exemple), notamment pour protéger la substance contenue au sein du récipient 1 des effets de la lumière, en particulier dans certaines plages de longueur d'onde (UV, etc.).

De préférence, le récipient 1 selon l'invention est en verre moulé, et non pas en verre étiré (c'est-à-dire fabriqué à partir d'une préforme, telle qu'un tube, en verre étiré). De manière connue en tant que telle, un tel récipient 1 en verre moulé peut être obtenu par un procédé « *soufflé-soufflé* » ou « *pressé-soufflé* », par exemple à l'aide d'une machine IS. En effet, il a été observé qu'un récipient en verre étiré présente intrinsèquement de par son procédé de formage un risque de délaminage (c'est-à-dire un risque de détachement de paillettes ou particules de verre de la surface de la face interne de la paroi du récipient par interaction du verre avec la substance contenue dans le récipient) accru par rapport à un récipient en verre moulé, et ce en particulier lorsque le verre est un verre borosilicate. Or la présence de particules de verre libres dans une substance, en particulier une substance pharmaceutique destinée à être administrée à un être humain ou à un animal, peut avoir des conséquences très graves sur le plan sanitaire.

Conformément à l'invention, la face interne 4 de la paroi 2 du récipient 1 forme une surface en verre nue destinée à venir en contact direct avec ladite substance. En d'autres termes, la face interne 4 de la paroi 2 en verre est dépourvue de toute couche superficielle, continue, exogène au verre de la paroi 2, qui aurait été déposée sur la face interne 4 afin de séparer cette dernière de la substance que la cavité d'accueil 3 du récipient 1 est destinée à contenir. Plus précisément, la face interne 4 de la paroi 2 en verre est dépourvue de tout revêtement barrière additionnel, exogène au verre de la paroi 2, prévu pour s'opposer à la migration d'une ou plusieurs espèce(s) ou élément(s) chimique(s) contenue(s) dans le verre de la paroi 2 en verre vers ladite substance et vice-versa. La face interne 4 de la paroi 2 du récipient 1 est donc ainsi en particulier dépourvue de couche superficielle qui serait formée d'un oxyde, d'un nitrure ou d'un oxy-nitrure d'un élément choisi parmi le groupe constitué du silicium Si, de l'aluminium Al, du titane Ti, du bore B, du zirconium Zr, du tantale Ta, ou d'un mélange de ces derniers, et /ou encore formée d'une matière organique, comme par exemple un ou plusieurs polysiloxanes (silicone), etc. Pour autant, il n'est pas exclu que le récipient 1 puisse présenter à la surface de sa face interne 4, et en particulier en amont d'un remplissage de la cavité d'accueil 3 par ladite substance, une ou plusieurs espèces chimiques exogènes au verre de la paroi 2, dans la mesure où ces espèces ne forment pas une couche de revêtement destinée à protéger le verre de la paroi 2 et la substance contenue dans la cavité d'accueil 3 de toute interaction chimique entre eux. Ainsi dépourvu de revêtement barrière déposé sur la face interne 4 de sa paroi 2 en verre, le récipient 1 selon l'invention est donc relativement facile et peu onéreux à fabriquer.

Conformément à l'invention, et bien que la paroi 2 en verre du récipient 1 soit généralement formée, comme déjà décrit ci-dessus, d'un verre borosilicate, la paroi 2 présente un profil atomique en sodium très particulier au voisinage de la surface de sa face interne 4, et sur une profondeur particulière en-dessous de ladite surface, qui confère au récipient 1 des propriétés tout à fait intéressantes en matière de résistance chimique du verre de ladite paroi 2 vis-à-vis de la substance destinée à être contenue dans ledit récipient 1. En particulier, ladite paroi 2 en verre du récipient selon l'invention présente une fraction atomique en sodium qui est inférieure à 2,0 %at jusqu'à une profondeur d'au moins 300 nm (+/- 1 nm) à partir de la surface de la face interne 4 de la paroi 2. Ainsi, depuis la surface de la face interne 4 de la paroi 2 en verre, et jusqu'à une profondeur d'au moins 300 nm, le verre de la paroi 2 présente une fraction atomique en sodium qui n'excède pas 2,0 %at.

Cette fraction atomique, ainsi que toutes les fractions atomiques dont il sera question dans ce qui suit, est mesurée, analysée, par spectrométrie de photoélectrons induits par rayons X (XPS). Avantageusement, les fractions atomiques dont il est question dans la présente description de l'invention sont mesurées par spectrométrie de photoélectrons induits par rayons X (XPS), sous un angle de détection de 90° (+/- 1°) par rapport à la surface de la face interne 4, à l'aide d'un système matériel et logiciel de spectrométrie XPS comprenant une source de rayons X Al Kalpha monochromatisée, avec un diamètre de zone analysée comprise entre 50 µm et 1 000 µm (et par exemple de 400 µm), et avec une abrasion en profondeur de la surface de la face interne 4 sous un flux d'ions argon, à une énergie préférentiellement comprise entre 0,5 keV et 5 keV (et par exemple de 2 keV), avec une vitesse d'érosion préférentiellement comprise entre 5 nm / min et 10 nm / min (et par exemple de 8,5 nm / min). Bien connue en tant que telle, une telle mesure par XPS peut être ainsi réalisée par exemple à l'aide d'un système matériel et logiciel de spectrométrie Thermo Scientific^{™} K-Alpha^{™} commercialisé par la société ThermoFisher, avec une source de rayons X Al Kalpha monochromatisée, un diamètre de zone analysée typiquement de 400 µm, et avec une abrasion de la surface en profondeur sous un flux d'ions argon, à une énergie de 2 keV, avec une vitesse d'érosion (mesurée sur une couche de SiO₂) de 8,5 nm / min par exemple.

La valeur de fraction atomique en sodium, jusqu'à une profondeur d'au moins 300 nm, étant donc toute au plus égale à 2 %at, il s'avère plus avantageux encore que ladite fraction atomique en sodium soit inférieure ou égale à 1,8 %at, de préférence inférieure ou égale à 1,6 %at, de préférence inférieure ou égale à 1,4 %at, et de préférence encore inférieure ou égale à 1,5 %at, jusqu'à une profondeur d'au moins 300 nm à partir de la surface de la face interne 4.

Le profil de fraction atomique en sodium du verre de la paroi 2 sur une telle profondeur de 300 nm n'est pas forcément strictement homogène à toute profondeur comprise entre 0 nm et 300 nm. En particulier, compte tenu du caractère généralement progressif dans le temps d'une agression du verre par une substance contenue dans la cavité d'accueil 3, il est avantageux en matière de résistance chimique du verre que la fraction atomique en sodium soit, en moyenne, d'une valeur qui va en décroissant depuis l'intérieur, c'est-à-dire depuis le cœur même, de la paroi 2 en verre en direction de la surface de la face interne 4 de cette dernière.

De préférence, ladite fraction atomique en sodium du verre de la paroi 2 est inférieure ou égale à 1,6 %at, de préférence inférieure ou égale à 1,5 %at, de préférence inférieure ou égale à 1,4 %at, de préférence inférieure ou égale à 1,3 %at, et de préférence encore inférieure ou égale à 1,2 %at, jusqu'à une profondeur d'au moins 200 nm (+/- 1 nm) à partir de la surface de la face interne 4.

De manière alternative ou complémentaire, ladite fraction atomique en sodium du verre de la paroi 2 est inférieure ou égale à 1,0 %at, de préférence inférieure ou égale à 0,9 %at, et de préférence encore inférieure ou égale à 0,8 %at, jusqu'à une profondeur d'au moins 100 nm (+/- 1 nm) à partir de la surface de la face interne 4.

De manière alternative ou complémentaire, ladite fraction atomique en sodium du verre de la paroi 2 est inférieure ou égale à 0,8 %at, et de préférence inférieure ou égale à 0,7 %at, jusqu'à une profondeur d'au moins 30 nm (+/- 1 nm) à partir de la surface de la face interne 4. De manière alternative ou complémentaire, ladite fraction atomique en sodium du verre de la paroi 2 est inférieure ou égale à 0,5 %at, de préférence inférieure ou égale à 0,4 %at, de préférence inférieure ou égale à 0,3 %at, et de préférence encore inférieure ou égale à 0,2 %at, jusqu'à une profondeur d'au moins 10 nm (+/- 1 nm) à partir de la surface de la face interne 4. Ainsi, le verre de la paroi 2 du récipient 1 présente, de manière particulièrement avantageuse, une concentration ou fraction atomique en sodium particulièrement faible au voisinage immédiat de la surface de la face interne 4 de ladite paroi 2, avantageusement comprise entre 0,0 %at et 0,8 %at, et plus avantageusement encore entre 0,0 %at et 0,5 %at.

En comparaison, la fraction atomique de sodium du verre d'un récipient en verre borosilicate classique (récipient en verre de type Type I) est typiquement égale à 6 %at en moyenne dans toute la profondeur de la paroi en verre, tandis que la fraction atomique de sodium du verre d'un récipient en verre sodocalcique classique (récipient en verre de type Type III) et du verre d'un récipient en verre de Type II classique (récipient en verre de type Type III traité) est typiquement comprise à 6 %at et 15 %at en moyenne dans toute la profondeur de la paroi en verre.

De manière alternative ou complémentaire, le récipient 1 peut avantageusement présenter certaines caractéristiques particulières en matière de rapport d'une fraction atomique d'un ou plusieurs autres éléments atomiques constitutifs du verre (en particulier de sodium, calcium et aluminium) sur une fraction atomique de silicium, qui contribuent à une structuration particulière du réseau du verre au voisinage de la surface de la face interne 4, tendant à améliorer encore la résistance du verre vis-à-vis de la substance destinée à être contenue dans la cavité d'accueil 3 du récipient 1.

En particulier, la paroi 2 en verre du récipient 1 présente avantageusement un rapport d'une fraction atomique en sodium sur une fraction atomique en silicium, lesquelles fractions atomiques étant mesurées par spectrométrie de photoélectrons induits par rayons X comme précisé précédemment, qui est inférieur ou égal à 0,100, de préférence inférieur ou égal à 0,090, et de préférence inférieur ou égal à 0,080, jusqu'à une profondeur d'au moins 300 nm (+/- 1 nm) à partir de la surface de la face interne 4.

De manière alternative ou complémentaire, la paroi 2 en verre présente avantageusement un rapport d'une fraction atomique en sodium sur une fraction atomique en silicium, mesurées par spectrométrie de photoélectrons induits par rayons X, qui est inférieur ou égal à 0,070, de préférence inférieur ou égal à 0,060, et de préférence encore inférieur ou égal à 0,050, jusqu'à une profondeur d'au moins 200 nm (+/- 1 nm) à partir de la surface de la face interne 4. De manière alternative ou complémentaire, la paroi 2 en verre présente avantageusement un rapport d'une fraction atomique en sodium sur une fraction atomique en silicium, mesurées par spectrométrie de photoélectrons induits par rayons X, qui est inférieur ou égal à 0,050, de préférence inférieur ou égal à 0,040, et de préférence encore inférieur ou égal à 0,030, jusqu'à une profondeur d'au moins 100 nm (+/- 1 nm) à partir de la surface de la face interne 4.

De manière alternative ou complémentaire, la paroi 2 en verre présente avantageusement un rapport d'une fraction atomique en sodium sur une fraction atomique en silicium, mesurées par spectrométrie de photoélectrons induits par rayons X, qui est inférieur ou égal à 0,040, de préférence inférieur ou égal à 0,030, et de préférence encore inférieur ou égal à 0,020, jusqu'à une profondeur d'au moins 30 nm (+/- 1 nm) à partir de la surface de la face interne 4. De manière alternative ou complémentaire, la paroi 2 en verre présente avantageusement un rapport d'une fraction atomique en sodium sur une fraction atomique en silicium, mesurées par spectrométrie de photoélectrons induits par rayons X, qui est inférieur ou égal à 0,030, de préférence inférieur ou égal à 0,020, de préférence inférieur ou égal à 0,010, et de préférence encore inférieur ou égal à 0,005, jusqu'à une profondeur d'au moins 10 nm (+/- 1 nm) à partir de la surface de la face interne 4.

La comparaison de fractions atomiques en sodium et en silicium est ici intéressante en ce qu'elle traduit une comparaison d'une concentration atomique en ion modificateur (en l'espèce, le sodium) et d'une concentration atomique en ion formateur (en l'espèce, le silicium). Les rapports avantageux proposés ci-dessus reflètent donc le fait que, au voisinage de la face interne 4 de la paroi 2 en verre, le verre est particulière riche en ions formateurs, ce qui contribue à sa résistance chimique.

De manière alternative ou complémentaire, la paroi 2 en verre présente avantageusement un rapport d'une fraction atomique en calcium sur une fraction atomique en silicium, toujours mesurées par spectrométrie de photoélectrons induits par rayons X, qui est inférieur ou égal à 0,040, de préférence inférieur ou égal à 0,030 et de préférence inférieur ou égal à 0,020, jusqu'à une profondeur d'au moins 300 nm (+/- 1 nm) à partir de la surface de la face interne 4. De manière alternative ou complémentaire, la paroi 2 en verre présente avantageusement un rapport d'une fraction atomique en calcium sur une fraction atomique en silicium, mesurées par spectrométrie de photoélectrons induits par rayons X, qui est inférieur ou égal à 0,030, et de préférence inférieur ou égal à 0,020, jusqu'à une profondeur d'au moins 200 nm (+/- 1 nm) à partir de la surface de la face interne 4. De manière alternative ou complémentaire, la paroi 2 en verre présente avantageusement un rapport d'une fraction atomique en calcium sur une fraction atomique en silicium, mesurées par spectrométrie de photoélectrons induits par rayons X, qui est inférieur ou égal à 0,010, et de préférence sensiblement nul, jusqu'à une profondeur d'au moins 10 nm (+/- 1 nm) à partir de la surface de la face interne 4.

De manière alternative ou complémentaire, la paroi 2 en verre présente avantageusement un rapport d'une fraction atomique en aluminium sur une fraction atomique en silicium, mesurées par spectrométrie de photoélectrons induits par rayons X, qui est inférieur ou égal à 0,030, et de préférence inférieur ou égal à 0,020, jusqu'à une profondeur d'au moins 300 nm (+/- 1 nm) à partir de la surface de la face interne 4. Pour autant, il s'avère étonnamment avantageux que la paroi 2 en verre présente une fraction atomique en aluminium, mesurée par spectrométrie de photoélectrons induits par rayons X, qui est supérieure ou égale à 3 %at, et de préférence supérieure ou égale à 3,5 %at, jusqu'à une profondeur d'au moins 300 nm (+/- 1 nm) à partir de la surface de la face interne 4. En effet, il semble qu'une telle teneur en aluminium soit favorable à une densification du réseau du verre au voisinage de la face interne 4 de la paroi 2 en verre, tendant à améliorer encore la résistance du verre vis-à-vis de la substance destinée à être contenue dans la cavité d'accueil 3 du récipient 1.

La migration d'ions bore et / ou d'ion baryum provenant du verre borosilicate du récipient 1 vers la substance destinée à être contenu dans ce dernier peut s'avérer problématique tant pour l'intégrité de ladite substance au fil du temps que du point de vue sanitaire pour l'utilisateur final de ladite substance. Ainsi, afin de conférer au récipient 1 d'excellentes performances en matière de maîtrise du taux d'élution d'ions bore, la paroi 2 en verre présente de préférence une fraction atomique en bore, mesurée par spectrométrie de photoélectrons induits par rayons X, qui est inférieure ou égale à 20,0 %at, et de préférence inférieure ou égale à 15,0 %at, jusqu'à une profondeur d'au moins 300 nm (+/- 1 nm) à partir de la surface de la face interne 4. De manière alternative ou complémentaire, la paroi 2 en verre présente avantageusement, une fraction atomique en bore, mesurée par spectrométrie de photoélectrons induits par rayons X, qui est inférieure ou égale à 15,0 %at, et de préférence inférieure ou égale à 10,0 %at, jusqu'à une profondeur d'au moins 30 nm (+/- 1 nm) à partir de la surface de la face interne 4.

Afin de conférer au récipient 1 d'excellentes performances en matière de maîtrise du taux d'élution d'ions baryum, la paroi 2 en verre présente de préférence une fraction atomique en baryum, mesurée par spectrométrie de photoélectrons induits par rayons X, qui est inférieure ou égale à 1,5 %at, de préférence inférieure ou égale à 1,4 %at, de préférence inférieure ou égale à 1,3 %at, de préférence inférieure ou égale à 1,2 %at, de préférence inférieure ou égale à 1,1 %at, et de préférence inférieure ou égale à 1,0 %at, jusqu'à une profondeur d'au moins 300 nm (+/- 1 nm) à partir de la surface de la face interne 4. De manière alternative ou complémentaire, la paroi 2 en verre présente avantageusement, une fraction atomique en baryum, toujours mesurée par spectrométrie de photoélectrons induits par rayons X, qui est inférieure ou égale à 0,9 %at, de préférence inférieure ou égale à 0,8 %at, de préférence encore inférieure ou égale à 0,7 %at, jusqu'à une profondeur d'au moins 30 nm (+/- 1 nm) à partir de la surface de la face interne 4.

Après avoir été soumis à un protocole de remplissage et de vieillissement tel que défini au chapitre 660 de l'USP (Pharmacopée des États-Unis d'Amérique) ou au chapitre 3.2.1. de la Pharmacopée Européenne (à savoir 1 h à 121 °C en autoclave, rempli avec de l'eau ultra pure), le récipient 1 présente ainsi une quantité totale d'extractibles (espèces extraites du verre) par unité de surface qui est avantageusement inférieure à 15.10⁻² µg.cm⁻², et plus avantageusement encore inférieure à 10.10⁻² µg.cm⁻² (par exemple, entre 7.10⁻² et 9.10⁻² µg.cm⁻²), parmi laquelle
- une quantité de sodium extrait avantageusement inférieure à 5.10⁻² µg.cm⁻², et plus avantageusement encore inférieure à 4.10⁻² µg.cm⁻² (par exemple, entre 1,5.10⁻² et 3,0.10⁻² µg.cm⁻²),
- une quantité d'aluminium extrait avantageusement inférieure à 2.10⁻² µg.cm⁻², et plus avantageusement encore inférieure à 1.10⁻² µg.cm⁻² (par exemple, entre 0,3.10⁻² et 0,8.10⁻² µg.cm⁻²),
- une quantité de baryum extrait avantageusement inférieure à 1,5.10⁻² µg.cm⁻², et plus avantageusement encore inférieure à 1.10⁻² µg.cm⁻² (par exemple, entre 0,1.10⁻² et 0,5.10⁻² µg.cm⁻²),
- une quantité de zinc extrait avantageusement inférieure à 0,8.10⁻² µg.cm⁻², et plus avantageusement encore inférieure à 0,5.10⁻² µg.cm⁻² (par exemple, entre 0,0.10⁻² et 0,2.10⁻² µg.cm⁻²).

De telles propriétés en matière des quantités d'extractibles constituent d'ailleurs des inventions en tant que telles. Ainsi, constitue une invention à part entière un récipient 1 comprenant une paroi 2 en verre délimitant une cavité d'accueil 3 pour une substance, en particulier pour une substance pharmaceutique ou de diagnostic, ladite paroi 2 en verre présentant une face interne 4 située en regard de ladite cavité d'accueil 3, ladite paroi 2 étant en verre borosilicate, ladite face interne 4 formant une surface en verre nue destinée à venir en contact direct avec la substance, ledit récipient 1 présentant une quantité totale d'extractibles (espèces extraites du verre) par unité de surface qui est inférieure à 15.10⁻² µg.cm⁻², et de préférence inférieure à 10.10⁻² µg.cm⁻² (par exemple, entre 7.10⁻² et 9.10⁻² µg.cm⁻²), après avoir été soumis à un protocole de remplissage et de vieillissement tel que défini au chapitre 660 de l'USP (Pharmacopée des États-Unis d'Amérique) ou au chapitre 3.2.1. de la Pharmacopée Européenne (à savoir pendant 1 h à 121 °C en autoclave, rempli avec de l'eau ultra pure).

Constitue également une invention à part entière un récipient 1 comprenant une paroi 2 en verre délimitant une cavité d'accueil 3 pour une substance, en particulier pour une substance pharmaceutique ou de diagnostic, ladite paroi 2 en verre présentant une face interne 4 située en regard de ladite cavité d'accueil 3, ladite paroi 2 étant en verre borosilicate, ladite face interne 4 formant une surface en verre nue destinée à venir en contact direct avec la substance, ledit récipient 1 présentant une quantité de sodium extrait qui est inférieure à 5.10⁻² µg.cm⁻², et de préférence inférieure à 4.10⁻² µg.cm⁻² (par exemple, entre 1,5.10⁻² et 3,0.10⁻² µg.cm⁻²), après avoir été soumis à un protocole de remplissage et de vieillissement tel que défini au chapitre 660 de l'USP (Pharmacopée des États-Unis d'Amérique) ou au chapitre 3.2.1. de la Pharmacopée Européenne (à savoir pendant 1 h à 121 °C en autoclave, rempli avec de l'eau ultra pure).

Constitue également une invention à part entière un récipient 1 comprenant une paroi 2 en verre délimitant une cavité d'accueil 3 pour une substance, en particulier pour une substance pharmaceutique ou de diagnostic, ladite paroi 2 en verre présentant une face interne 4 située en regard de ladite cavité d'accueil 3, ladite paroi 2 étant en verre borosilicate, ladite face interne 4 formant une surface en verre nue destinée à venir en contact direct avec la substance, ledit récipient 1 présentant une quantité d'aluminium extrait qui est inférieure à 2.10⁻² µg.cm⁻², et de préférence inférieure à 1.10⁻² µg.cm⁻² (par exemple, entre 0,3.10⁻² et 0,8.10⁻² µg.cm⁻²), après avoir été soumis à un protocole de remplissage et de vieillissement tel que défini au chapitre 660 de l'USP (Pharmacopée des États-Unis d'Amérique) ou au chapitre 3.2.1. de la Pharmacopée Européenne (à savoir pendant 1 h à 121 °C en autoclave, rempli avec de l'eau ultra pure).

Constitue également une invention à part entière un récipient 1 comprenant une paroi 2 en verre délimitant une cavité d'accueil 3 pour une substance, en particulier pour une substance pharmaceutique ou de diagnostic, ladite paroi 2 en verre présentant une face interne 4 située en regard de ladite cavité d'accueil 3, ladite paroi 2 étant en verre borosilicate, ladite face interne 4 formant une surface en verre nue destinée à venir en contact direct avec la substance, ledit récipient 1 présentant une quantité de baryum extrait qui est inférieure à 1,5.10⁻² µg.cm⁻², et de préférence inférieure à 1.10⁻² µg.cm⁻² (par exemple, entre 0,1.10⁻² et 0,5.10⁻² µg.cm⁻²), après avoir été soumis à un protocole de remplissage et de vieillissement tel que défini au chapitre 660 de l'USP (Pharmacopée des États-Unis d'Amérique) ou au chapitre 3.2.1. de la Pharmacopée Européenne (à savoir pendant 1 h à 121 °C en autoclave, rempli avec de l'eau ultra pure).

Constitue en outre une invention à part entière un récipient 1 comprenant une paroi 2 en verre délimitant une cavité d'accueil 3 pour une substance, en particulier pour une substance pharmaceutique ou de diagnostic, ladite paroi 2 en verre présentant une face interne 4 située en regard de ladite cavité d'accueil 3, ladite paroi 2 étant en verre borosilicate, ladite face interne 4 formant une surface en verre nue destinée à venir en contact direct avec la substance, ledit récipient 1 présentant une quantité de zinc extrait avantageusement inférieure à 0,8.10⁻² µg.cm⁻², et plus avantageusement encore inférieure à 0,5.10⁻² µg.cm⁻² (par exemple, entre 0,0.10⁻² et 0,2.10⁻² µg.cm⁻²).

Avantageusement, ces résultats peuvent être observés par analyse en spectrométrie d'émission de plasma à couplage inductif (ICP-OES), par exemple à l'aide d'un système matériel et logiciel ICP-OES PerkinElmer^{®} Optima^{™} 7300 DV, à chambre cyclonique avec nébuliseur Meinhard et purge d'argon (valeurs de relargage blancs soustraits - solutions acidifiées 2 % HNO3 suprapur - Sans dilution. Temps d'acquisition de 20 secondes. Quantification par mesure de l'aire sous le pic avec correction de fond en 2 points. Rinçage systématique entre les échantillons).

Compte tenu de ce qui précède, le récipient 1 à paroi 2 en verre conforme à l'invention présente d'excellentes caractéristiques en matière de maîtrise du phénomène d'élution d'espèces présentes dans le verre, ce qui signe une résistance chimique particulièrement forte, et rend ledit récipient 1 particulièrement apte à recevoir en sa cavité d'accueil 3 une substance particulièrement sensible auxdites espèces et / ou particulièrement agressive vis-à-vis du verre. Ainsi, le récipient 1 conforme à l'invention peut être avantageusement utilisé pour le stockage
- de certaines catégories de médicaments particulièrement sensibles à des changements de pH induits par le relargage d'ions sodium par le verre,
- d'eau pour injection (« *Water for injection* », WFI), dont le stockage est particulièrement agressif pour le verre,
- de certaines catégories de médicaments particulièrement sensibles au relargage d'autres ions du verre que le sodium, tel que des ions aluminium, bore, baryum, etc.
- ou encore plus généralement afin d'augmenter la durée de stockage d'une substance donnée.

De manière avantageuse, mais pour autant non limitative, un récipient 1 conforme à l'invention peut être obtenu, de manière particulièrement simple, peu onéreuse, efficace et sûre sur le plan sanitaire et environnemental, à partir d'un récipient (ou récipient primaire) de type flacon en verre borosilicate moulé de Type I, en soumettant ce dernier à un traitement de désalcalinisation du verre au voisinage de la surface de la face interne de sa paroi en verre par introduction dans la cavité d'accueil du récipient, à l'aide d'une tête d'injection disposée à distance de l'ouverture du récipient et en dehors de ce dernier, alors ladite paroi en verre est à une température de 600 °C environ, d'une dose liquide de sulfate d'ammonium (NH₄)₂SO₄ dissous dans de l'eau. De préférence, la concentration de la dose liquide en sulfate d'ammonium sera choisie proche ou juste au-dessous de la concentration à saturation. Le volume de ladite dose liquide pourra bien évidemment varier selon les dimensions, et en particulier le volume nominal, du récipient considéré.

Les exemples suivants, donnés à titre non limitatif, permettent d'illustrer certaines propriétés particulièrement intéressantes de récipients 1 conformes à l'invention en matière de performance de maîtrise des risques d'élution de certaines espèces chimiques du verre.

**Exemple 1** - Une première série de récipients conformes à l'invention a été fabriquée à partir de récipients primaires de type flacon en verre borosilicate moulé de Type I, d'une contenance nominale de 20 mL. Ces récipients primaires ont été soumis à un traitement de désalcalinisation du verre au voisinage de la surface de la face interne de leur paroi en verre par introduction dans la cavité d'accueil des récipients primaires, à l'aide d'une tête d'injection disposée à distance de l'ouverture des récipients primaires et en dehors de ces derniers, alors la paroi en verre des récipients primaires était à une température de 600 °C environ, d'une dose liquide de sulfate d'ammonium (NH₄)₂SO₄ dissous dans de l'eau à une concentration proche ou juste au-dessous de la concentration à saturation (volume de dose liquide : 80 µL).

Le tableau 1 ci-dessous compile des résultats obtenus pour l'un des récipients selon l'Exemple 1, par spectrométrie de photoélectrons induits par rayons X (XPS) comme décrit ci-avant, en matière de fractions atomiques (en %at) et de rapport de fractions atomiques de certaines espèces du verre de la paroi, à différentes profondeurs à partir de la surface de la face interne de cette dernière.

**Tableau 1**

| **Exemple 1** | | | | | | | | | | | | |
|---|---|---|---|---|---|---|---|---|---|---|---|---|
| **Profondeur (nm)** | **Fractions atomiques en espèces élémentaires (%at)** | | | | | | | | | **Rapport de fractions atomiques** | | |
| | **C1s** | **Al2p** | **Si2p** | **B1s** | **K2p** | **Ca2p** | **O1s** | **Ba3d5** | **Na1s** | **Na/Si** | **Ca/Si** | **Al/Si** |
| 0,0 | 9,0 | 2,2 | 24,5 | 6,5 | 0,6 | 0,0 | 56,5 | 0,1 | 0,6 | 0,025 | 0,000 | 0,092 |
| 7,9 | 0,0 | 4,1 | 26,4 | 7,6 | 0,6 | 0,0 | 60,9 | 0,3 | 0,1 | 0,004 | 0,000 | 0,154 |
| 23,0 | 0,0 | 3,3 | 25,9 | 9,8 | 0,8 | 0,3 | 58,6 | 0,6 | 0,6 | 0,025 | 0,012 | 0,129 |
| 92,7 | 0,0 | 3,2 | 26,2 | 10,1 | 0,7 | 0,3 | 58,1 | 0,9 | 0,7 | 0,025 | 0,013 | 0,121 |
| 192,3 | 0,0 | 3,4 | 25,5 | 9,9 | 0,8 | 0,4 | 58,0 | 0,9 | 1,1 | 0,043 | 0,017 | 0,132 |
| 291,9 | 0,0 | 3,7 | 24,4 | 10,9 | 0,7 | 0,4 | 57,1 | 1,0 | 1,8 | 0,076 | 0,018 | 0,151 |

**Exemple 2** - Une deuxième série de récipients conformes à l'invention a été fabriquée à partir de récipients primaires de type flacon en verre borosilicate moulé de Type I, d'une contenance nominale de 10 mL. Ces récipients primaires ont été soumis à un traitement de désalcalinisation du verre au voisinage de la surface de la face interne de leur paroi en verre par introduction dans la cavité d'accueil des récipients primaires, à l'aide d'une tête d'injection disposée à distance de l'ouverture des récipients primaires et en dehors de ces derniers, alors la paroi en verre des récipients primaires était à une température de 600 °C environ, d'une dose liquide de sulfate d'ammonium (NH₄)₂SO₄ dissous dans de l'eau à une concentration proche ou juste au-dessous de la concentration à saturation (volume de dose liquide : 80 µL).

Le tableau 2 ci-dessous compile des résultats obtenus pour cinq récipients R1 à R5 selon l'Exemple 2, par spectrométrie d'émission de plasma à couplage inductif (ICP-OES) comme décrite ci-avant, en matière de quantités d'espèces extraites du verre (exprimées en µg/L), après avoir soumis lesdits récipients à un protocole de remplissage et de vieillissement tel que défini au chapitre 660 de l'USP (Pharmacopée des États-Unis d'Amérique) ou au chapitre 3.2.1. de la Pharmacopée Européenne (à savoir 1 h à 121 °C en autoclave, remplis avec de l'eau ultra pure). Les résultats obtenus pour les récipients R1 à R5 sont comparés avec des résultats obtenus dans les mêmes conditions pour cinq récipients R1' à R5' de type flacons en verre de Type I classiques, d'une contenance nominale de 10 mL. On observe ainsi des quantités d'espèces extraites très nettement inférieures dans le cas des récipients conformes à l'invention par rapport aux quantités d'espèces extraites pour les récipients en verre de Type I connus.

**Tableau 2**

| **Exemple 2 (quantités en µg/L)** | | | | | | | | | | | | | | |
|---|---|---|---|---|---|---|---|---|---|---|---|---|---|---|
| **Espèces élémentaires** | **R1** | **R2** | **R3** | **R4** | **R5** | **Moyenne** | **R1'** | **R2'** | **R3'** | **R4'** | **R5'** | **Moyenne** | **Limite de détection (LoD)** | **Limite de quantification (LoQ)** |
| Si | 78 | 47 | 55 | 95 | 92 | *73* | 1066 | 1020 | 809 | 1336 | 1468 | *1140* | 2 | 5 |
| Na | 79 | 67 | 81 | 70 | 70 | *73* | 378 | 338 | 310 | 371 | 383 | *356* | 1 | 3 |
| K | 23 | 16 | 17 | 15 | 17 | *18* | 94 | 80 | 73 | 113 | 107 | *93* | 2 | 6 |
| Ca | 40 | 5 | 14 | 16 | 22 | *20* | 38 | 22 | 22 | 35 | 44 | *32* | 1 | 4 |
| Mg | 3 | 11 | 3 | 2 | 1 | *4* | 4 | 2 | 2 | 2 | 3 | *2* | 1 | 1 |
| Al | 15 | 15 | 14 | 15 | 14 | *15* | 177 | 141 | 119 | 185 | 193 | *163* | 3 | 7 |
| Fe | 1 | 1 | 0 | 0 | 0 | *0* | 1 | 1 | 1 | 2 | 1 | *1* | 1 | 1 |
| B | 15 | 13 | 12 | 13 | 15 | *14* | 143 | 127 | 104 | 170 | 186 | *146* | 1 | 2 |
| Ba | 5 | 4 | 6 | 5 | 5 | *5* | 108 | 87 | 73 | 122 | 131 | *104* | 1 | 1 |
| Ti | 0 | 0 | 0 | 0 | 0 | *0* | 1 | 0 | 1 | 1 | 1 | *1* | 1 | 1 |
| Zn | 2 | 2 | 2 | 2 | 2 | *2* | 43 | 40 | 35 | 53 | 56 | *45* | 1 | 2 |
| **Total extractibles** | 259 | 180 | 205 | 233 | 239 | *223* | 2054 | 1857 | 1546 | 2389 | 2573 | *2084* | | |

**Exemple 3** - Une troisième série de récipients conformes à l'invention a été fabriquée à partir de récipients primaires de type flacon en verre borosilicate moulé de Type I, d'une contenance nominale de 20 mL. Ces récipients primaires ont été soumis à un traitement de désalcalinisation du verre au voisinage de la surface de la face interne de leur paroi en verre par introduction dans la cavité d'accueil des récipients primaires, à l'aide d'une tête d'injection disposée à distance de l'ouverture des récipients primaires et en dehors de ces derniers, alors la paroi en verre des récipients primaires était à une température de 600 °C environ, d'une dose liquide de sulfate d'ammonium (NH₄)₂SO₄ dissous dans de l'eau à une concentration proche ou juste au-dessous de la concentration à saturation (volume de dose liquide : 80 µL).

Le tableau 3 ci-dessous compile des résultats obtenus pour cinq récipients R6 à R10 selon l'Exemple 3, par spectrométrie d'émission de plasma à couplage inductif (ICP-OES) comme décrite ci-avant, en matière de quantités d'espèces extraites du verre (exprimées en µg/L), après avoir soumis lesdits récipients à un protocole de remplissage et de vieillissement tel que défini au chapitre 660 de l'USP (Pharmacopée des États-Unis d'Amérique) ou au chapitre 3.2.1. de la Pharmacopée Européenne (à savoir 1 h à 121 °C en autoclave, remplis avec de l'eau ultra pure). Les résultats obtenus pour les récipients R6 à R10 sont comparés avec des résultats obtenus dans les mêmes conditions pour cinq récipients R6' à R10' de type flacons en verre de Type I classiques, d'une contenance nominale de 20 mL. On observe ainsi des quantités d'espèces extraites très nettement inférieures dans le cas des récipients conformes à l'invention par rapport aux quantités d'espèces extraites pour les récipients en verre de Type I connus.

**Tableau 3**

| **Exemple 3 (quantités en µg/L)** | | | | | | | | | | | | | | |
|---|---|---|---|---|---|---|---|---|---|---|---|---|---|---|
| **Espèces élémentaires** | **R6** | **R7** | **R8** | **R9** | **R10** | **Moyenne** | **R6'** | **R7'** | **R8'** | **R9'** | **R10'** | **Moyenne** | **Limite de détection (LoD)** | **Limite de quantification (LoQ)** |
| Si | 630 | 1022 | 597 | 596 | 489 | *667* | 38 | 38 | 49 | 46 | 36 | *41* | 2 | 5 |
| Na | 303 | 356 | 294 | 287 | 268 | *302* | 65 | 62 | 65 | 70 | 61 | *65* | 1 | 3 |
| K | 61 | 100 | 61 | 72 | 54 | *70* | 22 | 21 | 17 | 23 | 20 | *21* | 2 | 6 |
| Ca | 17 | 34 | 14 | 18 | 15 | *19* | 6 | 6 | 8 | 10 | 8 | *8* | 1 | 4 |
| Mg | 1 | 2 | 1 | 3 | 1 | *2* | 2 | 1 | 1 | 3 | 1 | *2* | 1 | 1 |
| Al | 97 | 149 | 97 | 94 | 80 | *103* | 19 | 13 | 14 | 15 | 14 | *15* | 3 | 7 |
| Fe | 1 | 1 | 1 | 1 | 5 | *2* | 0 | 1 | 1 | 1 | 2 | *1* | 1 | 1 |
| B | 108 | 150 | 100 | 89 | 76 | *104* | 24 | 22 | 22 | 28 | 25 | *24* | 1 | 2 |
| Ba | 65 | 102 | 62 | 58 | 49 | *67* | 5 | 5 | 5 | 8 | 5 | *6* | 1 | 1 |
| Ti | 1 | 1 | 0 | 0 | 0 | *0* | 0 | 0 | 0 | 0 | 0 | *0* | 1 | 1 |
| Zn | 29 | 43 | 28 | 27 | 23 | *30* | 3 | 3 | 2 | 3 | 2 | *3* | 1 | 2 |
| **Total extractibles** | 1312 | 1958 | 1254 | 1245 | 1059 | *1365* | 185 | 172 | 185 | 206 | 174 | *184* | | |

**Exemple 4** - Une quatrième série de récipients conformes à l'invention a été fabriquée à partir de récipients primaires de type flacon en verre borosilicate moulé de Type I, d'une contenance nominale de 50 mL. Ces récipients primaires ont été soumis à un traitement de désalcalinisation du verre au voisinage de la surface de la face interne de leur paroi en verre par introduction dans la cavité d'accueil des récipients primaires, à l'aide d'une tête d'injection disposée à distance de l'ouverture des récipients primaires et en dehors de ces derniers, alors la paroi en verre des récipients primaires était à une température de 600 °C environ, d'une dose liquide de sulfate d'ammonium (NH₄)₂SO₄ dissous dans de l'eau à une concentration proche ou juste au-dessous de la concentration à saturation (volume de dose liquide : 50 µL).

Le tableau 4 ci-dessous compile des résultats obtenus pour trois récipients R11 à R13 selon l'Exemple 4, par spectrométrie d'émission de plasma à couplage inductif (ICP-OES) comme décrite ci-avant, en matière de quantités d'espèces extraites du verre (exprimées en µg/L), après avoir soumis lesdits récipients à un protocole de remplissage et de vieillissement tel que défini au chapitre 660 de l'USP (Pharmacopée des États-Unis d'Amérique) ou au chapitre 3.2.1. de la Pharmacopée Européenne (à savoir 1 h à 121 °C en autoclave, remplis avec de l'eau ultra pure). Les résultats obtenus pour les récipients R11 à R13 sont comparés avec des résultats obtenus dans les mêmes conditions pour trois récipients R11' à R13' de type flacons en verre de Type I classiques, d'une contenance nominale de 50 mL. On observe ainsi des quantités d'espèces extraites très nettement inférieures dans le cas des récipients conformes à l'invention par rapport aux quantités d'espèces extraites pour les récipients en verre de Type I connus.

**Tableau 4**

| **Exemple 4 (quantités en µg/L)** | | | | | | | | | | |
|---|---|---|---|---|---|---|---|---|---|---|
| **Espèces élémentaires** | **R11** | **R12** | **R13** | **Moyenne** | **R11'** | **R12'** | **R13'** | **Moyenne** | **Limite de détection (LoD)** | **Limite de quantification (LoQ)** |
| Si | 33 | 36 | 35 | *35* | 702 | 463 | 623 | *596* | 2 | 6 |
| Na | 32 | 26 | 17 | *25* | 192 | 153 | 180 | *175* | 1 | 3 |
| K | 26 | 20 | 11 | *19* | 85 | 70 | 80 | *78* | 3 | 9 |
| Ca | 28 | 13 | 4 | *15* | 30 | 20 | 27 | *26* | 1 | 4 |
| Mg | 2 | 2 | 2 | *2* | 2 | 1 | 1 | *2* | 1 | 1 |
| Al | 11 | 11 | 10 | *11* | 65 | 44 | 55 | *55* | 1 | 2 |
| Fe | 1 | 1 | 0 | *1* | 0 | 0 | 0 | *0* | 1 | 1 |
| B | 20 | 22 | 21 | *21* | 137 | 96 | 123 | *119* | 1 | 1 |
| Ba | 4 | 4 | 4 | *4* | 73 | 53 | 68 | *65* | 1 | 1 |
| Ti | 0 | 0 | 0 | *0* | 0 | 0 | 0 | *0* | 3 | 10 |
| Zn | 4 | 3 | 2 | *3* | 25 | 17 | 22 | *22* | 1 | 1 |
| **Total extractibles** | 161 | 137 | 105 | *135* | 1312 | 918 | 1180 | *1137* | | |

Le tableau 5 ci-dessous compile des résultats obtenus pour trois autres récipients R14 à R16 selon l'Exemple 4, en comparaison avec des résultats obtenus dans les mêmes conditions pour trois récipients R14' à R16' de type flacon en verre de Type I classiques, d'une contenance nominale de 50 mL, en matière de résistance hydrolytique Rh de surface. La résistance hydrolytique Rh est ici mesurée de manière connue, par titrage d'une partie aliquote de la solution d'extraction (volume titré de 100 mL) obtenue avec une solution d'acide chlorhydrique (HCl N/100), après avoir soumis lesdits récipients à un protocole de remplissage et de vieillissement tel que défini au chapitre 660 de l'USP (Pharmacopée des États-Unis d'Amériques) ou au chapitre 3.2.1. de la Pharmacopée Européenne (à savoir 1 h à 121 °C en autoclave, rempli avec de l'eau ultra pure). La contenance à 90 % des récipients et ici de 54 mL.

**Tableau 5**

| **Exemple 4 (Rh exprimée en ml HCl N/100)** | | | | | | |
|---|---|---|---|---|---|---|
| | **R14** | **R15** | **R16** | **R14'** | **R15'** | **R16'** |
| **Rh** | 0,02 | 0,01 | 0,02 | 0,14 | 0,16 | 0,14 |

On observe que les récipients R14 à R16, conformes à l'invention, présentent une résistance hydrolytique Rh qui est bien meilleure (c'est-à-dire nettement plus faible) que celle des récipients R14' à R16' en verre de Type I connus. Pour rappel, pour une telle contenance, la limite réglementaire de résistance hydrolytique Rh pour un récipient en verre de Type III est de 4,8 ml HCl N/100, et celle d'un récipient en verre de Type Il de 0,5 ml HCl N/100, pour un volume titré de 100 mL.

**Exemple 5** - Une cinquième série de récipients conformes à l'invention a été fabriquée à partir de récipients primaires de type flacon en verre borosilicate moulé de Type I, d'une contenance nominale de 100 mL. Ces récipients primaires ont été soumis à un traitement de désalcalinisation du verre au voisinage de la surface de la face interne de leur paroi en verre par introduction dans la cavité d'accueil des récipients primaires, à l'aide d'une tête d'injection disposée à distance de l'ouverture des récipients primaires et en dehors de ces derniers, alors la paroi en verre des récipients primaires était à une température de 600 °C environ, d'une dose liquide de sulfate d'ammonium (NH₄)₂SO₄ dissous dans de l'eau à une concentration proche ou juste au-dessous de la concentration à saturation (volume de dose liquide : 120 µL).

Le tableau 6 ci-dessous compile des résultats obtenus pour cinq récipients R17 à R21 selon l'Exemple 5, par spectrométrie d'émission de plasma à couplage inductif (ICP-OES) comme décrite ci-avant, en matière de quantités d'espèces extraites du verre (exprimées en µg/L), après avoir soumis lesdits récipients à un protocole de remplissage et de vieillissement tel que défini au chapitre 660 de l'USP (Pharmacopée des États-Unis d'Amérique) ou au chapitre 3.2.1. de la Pharmacopée Européenne (à savoir 1 h à 121 °C en autoclave, remplis avec de l'eau ultra pure). Les résultats obtenus pour les récipients R17 à R21 sont comparés avec des résultats obtenus dans les mêmes conditions pour cinq récipients R17' à R21' de type flacons en verre de Type I classiques, d'une contenance nominale de 100 mL. On observe ainsi des quantités d'espèces extraites très nettement inférieures dans le cas des récipients conformes à l'invention par rapport aux quantités d'espèces extraites pour les récipients en verre de Type I connus.

**Tableau 6**

| **Exemple 5 (quantités en µg/L)** | | | | | | | | | | | | | | |
|---|---|---|---|---|---|---|---|---|---|---|---|---|---|---|
| **Espèces élémentaires** | **R17** | **R18** | **R19** | **R20** | **R21** | **Moyenne** | **R17'** | **R18'** | **R19'** | **R20'** | **R21'** | **Moyenne** | **Limite de détection (LoD)** | **Limite de quantification (LoQ)** |
| Si | 27 | 26 | 29 | 27 | 26 | *27* | 466 | 452 | 503 | 565 | 400 | *477* | 2 | 5 |
| Na | 41 | 38 | 39 | 44 | 35 | *39* | 213 | 202 | 218 | 221 | 197 | *210* | 1 | 3 |
| K | 17 | 16 | 16 | 18 | 14 | *16* | 48 | 45 | 50 | 52 | 41 | *47* | 2 | 6 |
| Ca | 15 | 3 | 3 | 7 | 2 | *6* | 12 | 10 | 12 | 13 | 9 | *11* | 1 | 4 |
| Mg | 4 | 1 | 1 | 1 | 1 | *2* | 1 | 1 | 1 | 1 | 1 | *1* | 1 | 1 |
| Al | 14 | 14 | 11 | 11 | 11 | *12* | 81 | 77 | 84 | 86 | 68 | *79* | 3 | 7 |
| Fe | 3 | 0 | 0 | 0 | 0 | *1* | 1 | 1 | 3 | 1 | 1 | *1* | 1 | 1 |
| B | 32 | 31 | 21 | 26 | 32 | *28* | 87 | 82 | 89 | 96 | 71 | *85* | 1 | 2 |
| Ba | 8 | 7 | 6 | 8 | 7 | *7* | 65 | 60 | 70 | 74 | 54 | *65* | 1 | 1 |
| Ti | 0 | 0 | 0 | 0 | 0 | *0* | 0 | 0 | 0 | 0 | 0 | *0* | 1 | 1 |
| Zn | 4 | 3 | 3 | 3 | 3 | *3* | 24 | 23 | 26 | 27 | 20 | *24* | 1 | 2 |
| **Total extractibles** | 163 | 139 | 127 | 145 | 131 | *141* | 997 | 953 | 1056 | 1135 | 863 | *1001* | | |

**Exemple 6** - Une sixième série de récipients conformes à l'invention a été fabriquée à partir de récipients primaires de type flacon en verre borosilicate moulé de Type I, d'une contenance nominale de 50 mL. Ces récipients primaires ont été soumis à un traitement de désalcalinisation du verre au voisinage de la surface de la face interne de leur paroi en verre par introduction dans la cavité d'accueil des récipients primaires, à l'aide d'une tête d'injection disposée à distance de l'ouverture des récipients primaires et en dehors de ces derniers, alors la paroi en verre des récipients primaires était à une température de 600 °C environ, d'une dose liquide de sulfate d'ammonium (NH₄)₂SO₄ dissous dans de l'eau à une concentration proche ou juste au-dessous de la concentration à saturation (volume de dose liquide : 120 µL).

Le tableau 7 ci-dessous compile des résultats obtenus pour trois séries de trois récipients R22 à R30 selon l'Exemple 6, en comparaison avec trois séries de trois récipients R22' à R30' en verre de Type I classiques, en matière de quantités d'espèces extraites du verre (exprimées en ppb), et ce pour différents tests décrits chapitre 1660 de l'USP (Pharmacopée des États-Unis d'Amérique) :
- Test 1 (récipients R22 à R24 / R24' à R24') : mesures d'espèces extraites du verre après avoir rempli les récipients d'une solution de chlorure de potassium KCI à 0,9 % et à pH 8,0, puis les avoir placés en autoclave pendant 1 h à 121 °C ;
- Test 2 (récipients R25 à R27 / R25' à R27') : mesures d'espèces extraites du verre après avoir rempli les récipients d'une solution d'acide citrique à 3 % et à pH 8,0, puis les avoir placés en étuve pendant 24 h à 80 °C ;
- Test 3 (récipients R28 à R30 / R28' à R30' : mesures d'espèces extraites du verre après avoir rempli les récipients d'une solution de glycine à une concentration de 20 mM et à pH 10,0, puis les avoir placés en étuve pendant 24 h à 50 °C.

**Tableau 7**

| **Exemple 6 (quantités en ppb)** | | | | | | |
|---|---|---|---|---|---|---|
| | **Test 1** | | **Test 2** | | **Test 3** | |
| **Espèces élémentaires** | **Moyenne R22 à R24** | **Moyenne R22' à R24'** | **Moyenne R25 à R27** | **Moyenne R25' à R27'** | **Moyenne R28 à R30** | **Moyenne R28' à R30'** |
| Si | 1497 | 1810 | 16703 | 22194 | 756 | 842 |
| Ca | 28 | 39 | 315 | 442 | 21 | 32 |
| Al | 60 | 80 | 2067 | 2753 | 39 | 47 |
| B | 144 | 189 | 2110 | 2825 | 86 | 120 |
| Ba | 71 | 107 | 1055 | 1481 | 35 | 62 |
| Zn | 31 | 48 | 408 | 554 | 14 | 28 |
| **Total extractibles** | 1831 | 2272 | 22657 | 30249 | 952 | 1131 |

Il ressort ainsi des résultats des Exemples 1 à 6 ci-dessus que les récipients 1 conformes à l'invention présentent des performances en matière de résistance chimique qui sont bien supérieures à celles de récipients de Type I classiques, lesquels présentent pourtant eux-mêmes intrinsèquement une résistance chimique bien meilleure que celle de récipients en verre de Type III ou de Type II. Les quantités d'espèces du verre qui sont susceptibles d'être relarguées par les récipients 1 conformes à l'invention sont particulièrement faibles, notamment s'agissant du sodium, de l'aluminium, du bore, du baryum, ou encore du zinc. Ainsi, l'utilisation de récipients 1 conformes à l'invention permet de stocker et de conserver des substances particulièrement agressives et / ou instable dans d'excellentes conditions. Elle permet en outre, de manière générale, d'allonger la durée de stockage et ainsi la durée de vie de substances, et en particulier de substances pharmaceutiques ou à usage diagnostique.

L'invention concerne par ailleurs, en tant que tel, un récipient brut comprenant une paroi en verre délimitant une cavité d'accueil, ladite paroi en verre présentant une face interne située en regard de ladite cavité d'accueil. Ledit récipient brut, semi-fini, est destiné à former un récipient 1 conforme à l'invention, tel que ce dernier a été décrit ci-dessus. Ainsi, la paroi en verre dudit récipient brut préfigure celle du récipient 1 conforme à l'invention. Conformément à l'invention, ladite paroi en verre du récipient brut est en verre borosilicate, selon la définition déjà donnée précédemment, et présente avantageusement les mêmes propriétés physico-chimiques en matière de fractions atomiques et de rapport de fractions atomiques que celles, décrites ci-avant, de la paroi 2 en verre du récipient 1 conforme à l'invention.

Selon l'invention, la face interne de la paroi en verre du récipient brut forme une surface en verre qui est pourvue de grains de sulfate de sodium (Na₂SO₄), qui constitue avantageusement un résidu d'un traitement de désalcalinisation du verre au voisinage de la surface de la face interne de la paroi en verre, de préférence à l'aide de sulfate d'ammonium ((NH₄)₂SO₄). Ledit récipient brut est ainsi avantageusement obtenu à partir d'un récipient à paroi en verre borosilicate, typiquement de Type I, de préférence en verre moulé, qui a été soumis à un traitement de désalcalinisation pour obtenir les caractéristiques physico-chimiques décrites ci-avant, et qui, en conséquence de ce traitement de désalcalinisation, présente des grains de sulfate de sodium à la surface de la face interne de sa paroi en verre. Lesdits grains de sulfate de sodium forment ainsi un dépôt résiduel pulvérulent, qui est destiné à être éliminé, par un lavage adéquat de la surface de la face interne de la paroi en verre, avant que la cavité d'accueil du récipient ne soit ultimement remplie de substance, et en particulier de substance pharmaceutique ou de diagnostic.

Conformément à l'invention, lesdits grains de sulfate de sodium sont conformés et agencés de manière sensiblement uniforme sur la surface en verre de la face interne, formant ainsi sur ladite surface un voile blanc (ou blanchâtre, d'aspect légèrement laiteux) translucide sensiblement homogène, au moins l'œil nu (c'est-à-dire d'un point de vue macroscopique) et sous un éclairage à l'aide d'une lumière dans le domaine du visible pour l'œil humain. Typiquement, lesdits grains de sulfate de sodium présentent une forme globalement sphérique. Lesdits grains de sulfate de sodium présentent avantageusement une taille moyenne comprise entre 50 nm et 1 500 nm. Par exemple, lesdits grains peuvent être regroupés en deux populations, à savoir une population de petits grains qui présentent une taille moyenne avantageusement comprise entre 50 nm et 200 nm, et une population de grands grains qui présentent une taille moyenne avantageusement comprise entre 500 nm et 1 500 nm. Lesdits grains de sulfate de sodium sont avantageusement distribués sur la surface en verre de la face interne avec une densité surfacique moyenne allant de 0,2 grains / µm² à 3 grains / µm², et de préférence de 0,2 grains / µm² à 1,5 grains / µm² (grains par micromètre carré). Par exemple, les grains peuvent être regroupés d'une part en une population de petits grains, comme évoquée ci-dessus, qui sont distribués sur la surface en verre de la face interne avec une densité surfacique moyenne allant avantageusement de 0,2 grains / µm² à 2,5 grains / µm², et plus avantageusement encore de 0,5 grains / µm² à 1,5 grains / µm², et d'autre part en une population de grands grains , comme également évoquée ci-dessus qui sont distribués sur la surface en verre de la face interne avec une densité surfacique moyenne allant avantageusement de 0 grains / µm² à 0,5 grains / µm², et plus avantageusement encore de 0 grains / µm² à 0,1 grains / µm². Ces caractéristiques de dimension et de densité surfacique peuvent être observées, par exemple, au microscope électronique à balayage (MEB).

Formé par de tels grains de sulfate de sodium uniformément distribués à la surface de la face interne, le voile blanc est ainsi sensiblement uniforme, et donc sensiblement dépourvu de taches plus ou moins marquées, opaques. De préférence, la face externe de la paroi en verre du récipient brut, opposée à ladite face interne, forme quant à elle une surface qui est sensiblement dépourvue de grains de sulfate de sodium (à l'exception éventuelle de quelques grains éparses). Alternativement toutefois, il reste envisageable que la surface de ladite face externe puisse elle-aussi être pourvue de grains de sulfate de sodium, auquel cas ces derniers sont conformés et agencés de manière sensiblement uniforme sur la surface de la face externe, formant ainsi là-aussi un voile blanc (ou blanchâtre, d'aspect légèrement laiteux) translucide sensiblement homogène, au moins l'œil nu (c'est-à-dire d'un point de vue macroscopique) et sous un éclairage à l'aide d'une lumière dans le domaine du visible pour l'œil humain.

Ledit récipient brut est destiné à subir un lavage de la surface de la face interne (et, le cas échéant, de la face externe) de la paroi en verre afin d'en éliminer ledit voile de grains de sulfate de sodium, avant que la cavité d'accueil du récipient ainsi obtenu ne soit ultimement remplie de substance, et en particulier de substance pharmaceutique ou de diagnostic. Ainsi, le lavage du récipient brut, semi-fini, permet de supprimer le voile blanc de la surface de la paroi en verre et d'obtenir avantageusement le récipient 1 de l'invention, tel que décrit précédemment.

Grâce à une telle caractéristique d'homogénéité, uniformité, du voile formé par les grains de sulfate de sodium, la paroi en verre du récipient brut conforme à l'invention peut être facilement et efficacement inspectée, à la recherche d'éventuels défauts verriers, à l'œil nu ou à l'aide d'une machine d'inspection optique automatique classique, et ce sans qu'il soit nécessaire de procéder à un quelconque post-traitement de la paroi en verre (tel qu'en particulier un lavage, une élimination des grains de sulfate, de la surface de la paroi en verre) préalablement à une telle inspection. Le contrôle qualité du récipient est ainsi particulièrement fiable, tout en étant plus simple et moins coûteux à mettre en œuvre. Ainsi contrôlé de manière fiable, le récipient est donc particulièrement sûr.

De manière particulièrement avantageuse, mais toutefois non limitative, un récipient brut conforme à l'invention peut être obtenu de manière simple et efficace à partir d'un récipient (ou récipient primaire) de type flacon en verre borosilicate moulé de Type I, en soumettant ce dernier à un traitement de désalcalinisation du verre au voisinage de la surface de la face interne de sa paroi en verre par introduction dans la cavité d'accueil du récipient, à l'aide d'une tête d'injection disposée à distance de l'ouverture du récipient et en dehors de ce dernier, alors ladite paroi en verre est à une température d'au moins 350 °C, et de préférence comprise entre 350 °C et 800 °C, d'une dose liquide de sulfate d'ammonium (NH₄)₂SO₄ dissous dans de l'eau ultra pure. De préférence, la concentration de la dose liquide en sulfate d'ammonium est choisie proche ou juste au-dessous de la concentration à saturation. Le volume de ladite dose liquide peut bien évidemment varier selon les dimensions, et en particulier le volume nominal, du récipient considéré.

Il en résulte que les récipients conformes à l'invention sont non seulement particulièrement performants en matière de résistance chimique, mais sont également particulièrement fiables, pour un coût de fabrication raisonnable.

### POSSIBILITE D'APPLICATION INDUSTRIELLE

L'invention trouve son application dans le domaine des récipients en verre, en particulier pour le conditionnement de substances pharmaceutiques ou de diagnostic.

## Revendications

1. Récipient (1) contenant un produit ou un sous-produit sanguin, ledit récipient (1) comprenant une paroi (2) en verre délimitant une cavité d'accueil (3) pour ledit produit ou sous-produit sanguin, ladite paroi (2) en verre présentant une face interne (4) située en regard de ladite cavité d'accueil (3), ledit récipient étant préférentiellement en verre moulé, ledit récipient (1) étant **caractérisé en ce que** ladite paroi (2) est en verre borosilicate, ladite face interne (4) formant une surface en verre nue destinée à venir en contact direct avec ladite substance, ladite paroi (2) en verre présentant une fraction atomique en sodium, mesurée par spectrométrie de photoélectrons induits par rayons X, qui est inférieure ou égale à 2,0 %at jusqu'à une profondeur d'au moins 300 nm à partir de la surface de la face interne (4).

2. Récipient (1) selon la revendication précédente, **caractérisé en ce que** ladite fraction atomique en sodium soit inférieure ou égale à 1,8 %at, de préférence inférieure ou égale à 1,6 %at, de préférence inférieure ou égale à 1,4 %at, et de préférence encore inférieure ou égale à 1,5 %at, jusqu'à une profondeur d'au moins 300 nm à partir de la surface de la face interne (4).

3. Récipient (1) selon l'une quelconque des revendications précédentes, **caractérisé en ce que** ladite fraction atomique en sodium est inférieure ou égale à 1,6 %at, de préférence inférieure ou égale à 1,4 %at, et de préférence encore inférieure ou égale à 1,2 %at, jusqu'à une profondeur d'au moins 200 nm à partir de la surface de la face interne (4).

4. Récipient (1) selon l'une quelconque des revendications précédentes, **caractérisé en ce que** ladite fraction atomique en sodium est inférieure ou égale à 0,5 %at, de préférence inférieure ou égale à 0,4 %at, de préférence inférieure ou égale à 0,3 %at, et de préférence encore inférieure ou égale à 0,2 %at, jusqu'à une profondeur d'au moins 10 nm à partir de la surface de la face interne (4).

5. Récipient (1) selon l'une quelconque des revendications précédentes, **caractérisé en ce que** ladite paroi (2) en verre présente un rapport d'une fraction atomique en sodium sur une fraction atomique en silicium, mesurées par spectrométrie de photoélectrons induits par rayons X, qui est inférieur ou égal à 0,100, de préférence inférieur ou égal à 0,090, et de préférence inférieur ou égal à 0,080, jusqu'à une profondeur d'au moins 300 nm à partir de la surface de la face interne (4).

6. Récipient (1) selon l'une quelconque des revendications précédentes, **caractérisé en ce que** ladite paroi (2) en verre présente un rapport d'une fraction atomique en sodium sur une fraction atomique en silicium, mesurées par spectrométrie de photoélectrons induits par rayons X, qui est inférieur ou égal à 0,070, de préférence inférieur ou égal à 0,060, et de préférence encore inférieur ou égal à 0,050, jusqu'à une profondeur d'au moins 200 nm à partir de la surface de la face interne (4).

7. Récipient (1) selon l'une quelconque des revendications précédentes, **caractérisé en ce que** ladite paroi (2) en verre présente un rapport d'une fraction atomique en sodium sur une fraction atomique en silicium, mesurées par spectrométrie de photoélectrons induits par rayons X, qui est inférieur ou égal à 0,030, de préférence inférieur ou égal à 0,020, de préférence inférieur ou égal à 0,010, et de préférence encore inférieur ou égal à 0,005, jusqu'à une profondeur d'au moins 10 nm à partir de la surface de la face interne (4).

8. Récipient (1) selon l'une quelconque des revendications précédentes, **caractérisé en ce que** ladite paroi (2) en verre présente un rapport d'une fraction atomique en calcium sur une fraction atomique en silicium, mesurées par spectrométrie de photoélectrons induits par rayons X, qui est inférieur ou égal à 0,040, de préférence inférieur ou égal à 0,030, et de préférence inférieur ou égal à 0,020, jusqu'à une profondeur d'au moins 300 nm à partir de la surface de la face interne (4).

9. Récipient (1) selon l'une quelconque des revendications précédentes, **caractérisé en ce que** ladite paroi (2) en verre présente un rapport d'une fraction atomique en calcium sur une fraction atomique en silicium, mesurées par spectrométrie de photoélectrons induits par rayons X, qui est inférieur ou égal à 0,030, et de préférence inférieur ou égal à 0,020, jusqu'à une profondeur d'au moins 200 nm à partir de la surface de la face interne (4).

10. Récipient (1) selon l'une quelconque des revendications précédentes, **caractérisé en ce que** ladite paroi (2) en verre présente un rapport d'une fraction atomique en calcium sur une fraction atomique en silicium, mesurées par spectrométrie de photoélectrons induits par rayons X, qui est inférieur ou égal à 0,010, et de préférence sensiblement nul, jusqu'à une profondeur d'au moins 10 nm à partir de la surface de la face interne (4).

11. Récipient (1) selon l'une quelconque des revendications précédentes, **caractérisé en ce que** ladite paroi (2) en verre présente un rapport d'une fraction atomique en aluminium sur une fraction atomique en silicium, mesurées par spectrométrie de photoélectrons induits par rayons X, qui est inférieur ou égal à 0,030, et de préférence inférieur ou égal à 0,020, jusqu'à une profondeur d'au moins 300 nm à partir de la surface de la face interne (4).

12. Récipient (1) selon l'une quelconque des revendications précédentes, **caractérisé en ce que** ladite paroi (2) en verre présente une fraction atomique en bore, mesurée par spectrométrie de photoélectrons induits par rayons X, qui est inférieure ou égale à 20,0 %at, et de préférence inférieure ou égale à 15,0 %at, jusqu'à une profondeur d'au moins 300 nm à partir de la surface de la face interne (4).

13. Récipient (1) selon l'une quelconque des revendications précédentes, **caractérisé en ce que** ladite paroi (2) en verre présente une fraction atomique en bore, mesurée par spectrométrie de photoélectrons induits par rayons X, qui est inférieure ou égale à 15,0 %at, et de préférence inférieure ou égale à 10,0 %at, jusqu'à une profondeur d'au moins 30 nm à partir de la surface de la face interne (4).

14. Récipient (1) selon l'une quelconque des revendications précédentes, **caractérisé en ce que** ladite paroi (2) en verre présente une fraction atomique en baryum, mesurée par spectrométrie de photoélectrons induits par rayons X, qui est inférieure ou égale à 1,5 %at, de préférence inférieure ou égale à 1,2 %at, et de préférence inférieure ou égale à 1,0 %at, jusqu'à une profondeur d'au moins 300 nm à partir de la surface de la face interne (4).

15. Récipient (1) selon l'une quelconque des revendications précédentes, **caractérisé en ce que** ladite paroi (2) en verre présente une fraction atomique en baryum, mesurée par spectrométrie de photoélectrons induits par rayons X, qui est inférieure ou égale à 0,9 %at, de préférence inférieure ou égale à 0,8 %at, de préférence encore inférieure ou égale à 0,7 %at, jusqu'à une profondeur d'au moins 30 nm à partir de la surface de la face interne (4).
